# EUROPÄISCHE PATENTSCHRIFT

(11) **EP 3 843 912 B1**
(45) Veröffentlichungstag und Bekanntmachung des Hinweises auf die Patenterteilung: **20.04.2022**
(21) Anmeldenummer: 19755901.6
(22) Anmeldetag: 16.08.2019
(51) Int. Cl.: B21B 31/24

(54) **VERWENDUNG EINER VORRICHTUNG ZUM ANSTELLEN EINES GEGENSTANDES UND WALZGERÜST**
USE OF A DEVICE FOR ADJUSTING AN OBJECT AND ROLLING MILL
UTILISATION D'UN DISPOSITIF DE REGLAGE D'UN OBJET ET LAMINOIR

(30) Priorität: 29.08.2018 DE 102018214583
(43) Veröffentlichungstag der Anmeldung: 07.07.2021
(73) Patentinhaber: SMS Group GmbH, 40237 Düsseldorf (DE)
(72) Erfinder: BENDER, Hans-Jürgen, 57462 Olpe (DE); PAERSCH, Volker, 57271 Hilchenbach (DE)
(74) Vertreter: Klüppel, Walter
(86) Internationale Anmeldenummer: PCT/EP2019/072035
(87) Internationale Veröffentlichungsnummer: WO 2020/043514

(56) Entgegenhaltungen:
- EP-A1- 2 650 072
- EP-B1- 2 650 072
- CN-A- 108 246 809
- DE-A1-102013 224 644

## Beschreibung

Die europäische Patentanmeldung EP 2 650 072 A1 offenbart eine automatische Gewindeschneidmaschine, welche einen Elektromotor aufweist. Der Elektromotor weist einen Stator und einen Rotor auf sowie eine Spindel zum Halten und Drehbewegen eines Werkzeugs, insbesondere eines Gewindeschneiders. Die Spindel ist in einem Hohlraum innerhalb des Rotors angeordnet. Die Oberbegriffe der Ansprüche 1 und 2 basieren auf der EP 2 650 072 A1. Der Oberbegriff des Anspruchs 3 basiert auf der DE 10 2013 224644 A1.

Ausgehend von diesem Stand der Technik liegt der Erfindung die Aufgabe zugrunde, alternative Verwendungen für die bekannte Vorrichtung zum Anstellen eines Gegenstandes vorzusehen.

Diese Aufgabe wird durch den Gegenstand des Patentanspruchs 1 gelöst. Demnach wird die Vorrichtung verwendet zum Anstellen einer Walze in einem Walzgerüst.

Die Vorrichtung kann auch verwendet werden zum Anstellen eines Druckstempels in einer Brammenstauchpresse gemäß Anspruch 2.

Der Torquemotor sitzt nicht mehr stirnseitig an einem axialen Ende der Vorrichtung, sondern ist hier mit seinem Stator und Rotor koaxial zu dem motorseitigen Ende der Druckspindel und auf dessen axialer Höhe ausgebildet und angeordnet. Die noch im Stand der Technik erforderliche Antriebswelle als axiale Verbindung zwischen dem Motor und der Druckspindel kann ersatzlos entfallen. Die Vorrichtung baut deshalb kürzer und kompakter. Die elektromotorischen Antriebskomponenten wie Magnete und die Spulen des Stators sind vorteilhafterweise direkt in die Mechanik des Anstellsystems bzw. der Vorrichtung integriert. Insbesondere durch den Wegfall der Antriebswelle ist die gesamte Vorrichtung einfacher mechanisch gestaltet. Darüber hinaus ist die Regelcharakteristik insgesamt steifer als bei der bekannten Lösung aus dem Stand der Technik. Die beanspruchte Vorrichtung ist weniger komplex, hat geringere Herstel-Seite 1 lungskosten und ist einfacher in der Montage in der Werkstatt und beim Kunden. Sie erfordert weniger Wartungsaufwand im Betrieb und geringere Betriebskosten insbesondere, weil weniger Schmieröl verwendet werden muss. Darüber hinaus ist der Energieverbrauch geringer bzw. der Wirkungsgrad höher.

Der Stator ist ortsfest, d. h. weder drehbar noch axial verschiebbar angeordnet. Der Rotor ist innerhalb des Stators drehbar gelagert, ist aber in axialer Richtung auf den Bereich des Stators festgelegt. Dadurch wird gewährleistet, dass der Torquemotor immer ein gleiches Drehmoment auf den Rotor ausübt. Durch die Nabe/Welle-Verbindung (=Keilgetriebe) zwischen dem Rotor und der Druckspindel wird gewährleistet, dass die Druckspindel axial gegenüber dem Rotor verschiebbar gelagert ist und dass aber trotzdem das besagte Drehmoment immer in voller Stärke von dem Rotor auf die Druckspindel übertragen wird, unabhängig davon, wie die Druckspindel axial zum Rotor steht bzw. gegenüber diesem axial verschoben ist. Insbesondere wird dasselbe Drehmoment auch dann auf die Druckspindel übertragen, wenn diese nur teilweise oder gar nicht in den Rotor bzw. Stator eintaucht. Voraussetzung ist immer nur, das die Druckspindel über das Keilgetriebe zumindest noch ein Stück weit in Eingriff mit dem Rotor steht.

Schließlich wird die Aufgabe gelöst durch ein Walzgerüst gemäß Anspruch 3, in welchem die Vorrichtung verwendet wird.

Gemäß einem ersten Ausführungsbeispiel ist es vorteilhaft, wenn ein Permanentmagnet an der Peripherie des Rotors angebracht ist. Dieser erhöht den Wirkungsgrad des Torquemotors. Besonders vorteilhaft ist die Fertigung des Permanentmagneten aus einem Seltene-Erden-Metall, beispielsweis Neodym, weil damit besonders starke Magnetfelder erzeugt werden können. Um die Wirkung des Permanentmagneten nicht negativ zu beeinflussen ist es vorteilhaft, wenn der Rotor, d. h. die Vielkeilnabe zumindest teilweise oder ganz aus einem nicht-magnetischen Werkstoff gefertigt ist.

Im Hinblick auf eine möglichst gute und einfache Integration der elektromotorischen Komponenten in die Mechanik des Anstellsystems ist es vorteilhaft, wenn der Stator und/oder die Druckmutter jeweils ortsfest an einem Gehäuse der Vorrichtung montiert sind.

Darüber hinaus ist es vorteilhaft, wenn der Rotor in Form der Vielkeilnabe in axialer Richtung ortsfest, aber drehbar gelagert an dem Gehäuse befestigt ist. Schließlich ist es sinnvoll, wenn eine Bremseinrichtung vorgesehen ist zum Abbremsen und Halten des Rotors.

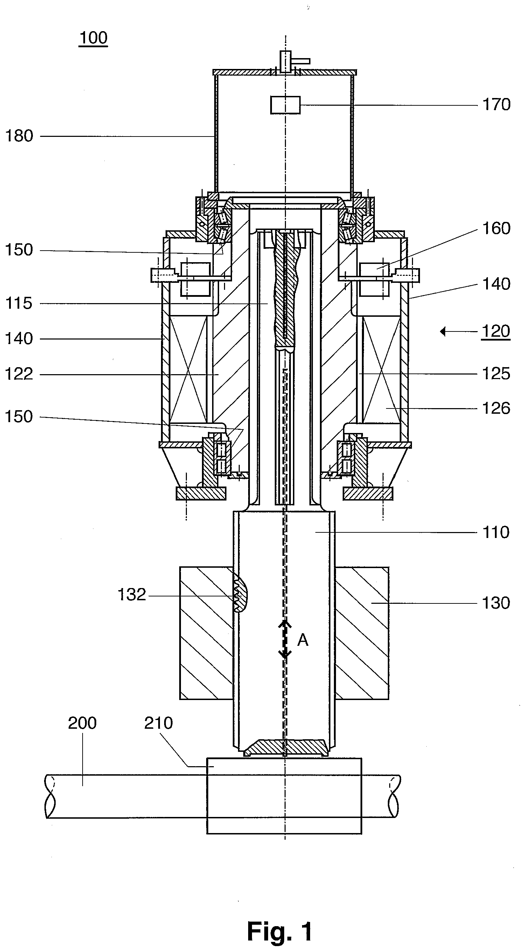

Der Beschreibung ist eine einzige Zeichnung, Figur 1 beigefügt, welche die verwendete Vorrichtung in einem Längsschnitt zeigt.

Die Vorrichtung wird nachfolgend unter Bezugnahme auf diese Zeichnung in Form von Ausführungsbeispielen detailliert beschrieben.

Das Kernstück der Vorrichtung 100 ist eine Druckspindel 110, welche mit Hilfe eines Torquemotors 120, bestehend aus einem Stator 126 und einem Rotor in Form einer Keilnabe 122 drehangetrieben wird. Zu diesem Zweck ist das motorseitige Ende der Druckspindel 110 in Form einer Vielkeilwelle 115 ausgebildet, welche mit der sie koaxial umgebenden Vielkeilnabe 122 drehgekoppelt in Eingriff steht. Dies bedeutet: Bei einer Rotation des Rotors bzw. der Vielkeilnabe 122 wird die Druckspindel aufgrund der besagten Kopplung über das Vielkeilgetriebe (Vielkeilnabe in Verbindung mit Vielkeilwelle) automatisch mit drehangetrieben bzw. rotiert.

Der Rotor bzw. die Vielkeilnabe 122 sind in einem Gehäuse 140 der Vorrichtung über Rollenlager 150 drehbar gelagert. An dem oberen Ende der Vorrichtung ist dieses Rollenlager 150 vorzugsweise als Kegelrollenlager ausgebildet während das Rollenlager 150 an dem unteren Ende des Rotors vorzugsweise in Form eines Zylinderrollenlagers ausgebildet ist. In axialer Richtung A ist der Rotor bzw. die Vielkeilnabe 122 festgelegt, d. h. er bzw. sie ist nicht axial verschiebbar. An der Peripherie des Rotors sind Permanentmagnete 125 befestigt zur Verstärkung des von dem Torquemotor erzeugten Drehmomentes. Bevorzugt sind diese Dauermagnete aus einem Seltene-Erden-Metall, beispielsweise Neodym gefertigt, weil damit ein besonders starkes Magnetfeld erzeugbar ist.

Neben dem Rotor 122 gehört zu dem Torquemotor 120, wie gesagt, auch ein Stator 126. Dieser ist typischerweise in Form einer elektromagnetischen Spule ausgebildet, welcher an dem Gehäuse 140 der Vorrichtung ortsfest montiert ist und den Rotor koaxial umschließt. Im vorliegenden Fall ist der Torquemotor 120 als Innenläufer ausgebildet, d. h. der Rotor 122 läuft in dem Stator 126.

Das über das Vielkeilgetriebe bzw. die Vielkeilnabe 122 drehgekoppelte motorseitige Ende 115 der Druckspindel 110 kann gegenüber ihrem motorfernen Ende verjüngt ausgebildet sein, wie in der Figur 1 gezeigt. Die verjüngte Ausbildung des motorseitigen Endes der Druckspindel trägt zu der kompakten Bauweise der Vorrichtung in radialer Richtung bei.

Der motorferne Bereich der Druckspindel 110 ist in eine ortsfest angeordnete Druckmutter 130 eingeschraubt, d. h. über ein Gewinde 132 in der Druckmutter 130 drehbar gelagert.

Schließlich ist in der Figur zu erkennen, dass eine Bremseinrichtung 160 vorgesehen ist zum Abbremsen und Halten des Motors. An dem der Druckmutter gegenüberliegenden Ende weist die Vorrichtung 100 stirnseitig vorzugsweise eine Schutzhaube 180 auf, in welcher ein Weggeber 170 angeordnet sein kann. Dieser Weggeber 170 dient zum Erfassen der axialen Stellung bzw. Verschiebeposition der Druckspindel 110.

Die Funktionsweise der Vorrichtung wird nachfolgend nochmals kurz erläutert:
Der Torquemotor 120 erzeugt mit seinem Stator 126, d. h. mit einer elektromagnetischen Spule ein Magnetfeld mit dessen Hilfe der in dem Stator 126 laufende Rotor, d. h. die Vielkeilnabe 122 drehangetrieben wird. Die rotierende Vielkeilnabe 122 versetzt die mit ihr drehgekoppelte Druckspindel 110 in eine synchrone Rotation. Insbesondere durch das Vorsehen von dem starken Permanentmagneten 125 zwischen dem Stator und dem Rotor kann der Torquemotor ein sehr hohes Drehmoment auf die Druckspindel 110 ausüben bzw. übertragen. Die Druckspindel 110 trägt in ihrem motorfernen Bereich an ihrer Außenseite ein Außengewinde, welches in ein Innengewinde der ortsfest gelagerten Druckmutter 130 eingreift. Im Falle einer Drehung bzw. Rotation der Druckspindel wird diese durch die Wechselwirkung mit der ortsfesten Druckmutter 130 auch in axialer Richtung A bewegt. Diese axiale Bewegung ermöglicht die Ausübung einer axialen Anstellkraft der Druckspindel 110 gegen das Einbaustück 210 einer Walze 200 in einem Walzgerüst oder gegen einen Druckstempel in einer Brammenstauchpresse.

### Bezugszeichenliste

- 100: Vorrichtung
- 110: Druckspindel
- 115: Vielkeilwelle
- 120: Torquemotor
- 122: Rotor bzw. Vielkeilnabe
- 125: Permanentmagnet
- 126: Stator
- 130: Druckmutter
- 132: Gewinde
- 140: Gehäuse
- 150: Rollenlager
- 160: Bremseinrichtung
- 170: Weggeber
- 180: Schutzhaube
- 200: Walze
- 210: Einbaustück bzw. Lager der Walze

- A: Axiale Richtung

## Patentansprüche

1. Verwendung einer Vorrichtung (100) zum Anstellen eines Gegenstandes (200), aufweisend:
eine drehbar gelagerte Druckspindel (110);
einen Torquemotor (120) mit einem Stator und einem Rotor zum Rotieren der Druckspindel (110), wobei der Stator in Form von mindestens einer elektromagnetischen Spule ausgebildet und ortsfest montiert ist;
eine ortsfest angeordnete Druckmutter (130), welche über ein Gewinde (132) mit der Druckspindel drehgekoppelt in Eingriff steht zum Erzeugen einer axialen Bewegung der Druckspindel im Falle von deren Rotation und zum Erzeugen und Übertragen einer axialen Anstellkraft auf den Gegenstand (200); , wobei
der Torquemotor (120) als Innenläufer ausgebildet ist, wobei der Rotor (122) in dem Stator (126) rotiert;
der Rotor (122) des Torquemotors in Form einer drehbar gelagerten Vielkeilnabe ausgebildet ist, und
das motorseitige Ende der Druckspindel in Form einer Vielkeilwelle (115) ausgebildet ist, welche in die Vielkeilnabe eingeschoben ist und mit der Vielkeilnabe (122) drehgekoppelt in Eingriff steht zum Rotieren der Druckspindel (110); **dadurch gekennzeichnet, dass** die Vorrichtung zum Anstellen einer Walze als dem Gegenstand in einem Walzgerüst zum Walzen von metallischem Walzgut verwendet wird.

2. Verwendung einer Vorrichtung (100) zum Anstellen eines Gegenstandes (200), aufweisend:
eine drehbar gelagerte Druckspindel (110);
einen Torquemotor (120) mit einem Stator und einem Rotor zum Rotieren der Druckspindel (110), wobei der Stator in Form von mindestens einer elektromagnetischen Spule ausgebildet und ortsfest montiert ist;
eine ortsfest angeordnete Druckmutter (130), welche über ein Gewinde (132) mit der Druckspindel drehgekoppelt in Eingriff steht zum Erzeugen einer axialen Bewegung der Druckspindel im Falle von deren Rotation und zum Erzeugen und Übertragen einer axialen Anstellkraft auf den Gegenstand (200),
wobei
der Torquemotor (120) als Innenläufer ausgebildet ist, wobei der Rotor (122) in dem Stator (126) rotiert;
der Rotor (122) des Torquemotors in Form einer drehbar gelagerten Vielkeilnabe ausgebildet ist, und
das motorseitige Ende der Druckspindel in Form einer Vielkeilwelle (115) ausgebildet ist, welche in die Vielkeilnabe eingeschoben ist und mit der Vielkeilnabe (122) drehgekoppelt in Eingriff steht zum Rotieren der Druckspindel (110); **dadurch gekennzeichnet, dass** die Vorrichtung zum Anstellen eines Druckstempels als dem Gegenstand in einer Brammenstauchpresse verwendet wird.

3. Walzgerüst aufweisend
eine Walze zum Walzen von metallischem Walzgut;
**gekennzeichnet durch**
eine Vorrichtung (100) zum Anstellen der Walze (200), aufweisend:
eine drehbar gelagerte Druckspindel (110);
einen Torquemotor (120) mit einem Stator und einem Rotor zum Rotieren der Druckspindel (110), wobei der Stator in Form von mindestens einer elektromagnetischen Spule ausgebildet und ortsfest montiert ist;
eine ortsfest angeordnete Druckmutter (130), welche über ein Gewinde (132) mit der Druckspindel drehgekoppelt in Eingriff steht zum Erzeugen einer axialen Bewegung der Druckspindel im Falle von deren Rotation und zum Erzeugen und Übertragen einer axialen Anstellkraft auf die Walze (200); **dadurch gekennzeichnet, dass**
der Torquemotor (120) als Innenläufer ausgebildet ist;
der Rotor (122) in dem Stator (126) rotiert;
der Rotor (122) des Torquemotors in Form einer drehbar gelagerten Vielkeilnabe ausgebildet ist, und
das motorseitige Ende der Druckspindel in Form einer Vielkeilwelle (115) ausgebildet ist, welche in die Vielkeilnabe eingeschoben ist und mit der Vielkeilnabe (122) drehgekoppelt in Eingriff steht zum Rotieren der Druckspindel (110).

4. Walzgerüst nach Anspruch 3
**dadurch gekennzeichnet,**
**dass** die Vielkeilnabe (122) aus einem nicht-magnetischen Werkstoff gefertigt ist.

5. Walzgerüst nach einem der Ansprüche 3 oder 4,
**gekennzeichnet durch**
ein Gehäuse (140), an welchem der Stator (126) ortsfest, die Druckmutter (130) ortsfest und/oder der Rotor (122) in Form der Vielkeilnabe in axialer Richtung (A) ortsfest, aber, vorzugsweise über Rollenlager (150), drehbar gelagert ist.

6. Walzgerüst nach einem der Ansprüche 3 bis 5,
**gekennzeichnet durch**
eine Bremseinrichtung (160) zum Abbremsen und Halten des Rotors.

7. Walzgerüst nach einem der Ansprüche 3 bis 6,
**gekennzeichnet durch**
einen Weggeber (170) zum Erfassen der axialen Stellung bzw. Verschiebeposition der Druckspindel (110).

8. Walzgerüst nach einem der Ansprüche 3 bis 7,
**dadurch gekennzeichnet,**
**dass** mindestens ein Permanentmagnet (125), vorzugweise aus einem Seltene-Erden-Metall, beispielsweise aus Neodym gefertigt, an der Peripherie des Rotors (122) angebracht ist.

## Claims

1. Use of a device (100) for adjusting an object (200), comprising:
a rotatably mounted pressure spindle (110);
a torque motor (120) with a stator and a rotor for rotating the pressure spindle (110),
wherein the stator is constructed in the form of at least one electromagnetic coil and is mounted in stationary location;
a pressure nut (130), which is arranged in stationary location and which is disposed in rotationally coupled engagement with the pressure spindle by way of a thread (132) in order to generate an axial movement of the pressure spindle in the case of rotation thereof and to generate and transmit an axial adjusting force to the object (200);
wherein
the torque motor (120) is constructed as an internal runner, wherein the rotor (122) rotates in the stator (126);
the rotor (122) of the torque motor is constructed in the form of a rotatably mounted splined hub and
the motor-side end of the pressure spindle is constructed in the form of a splined shaft (115) which is pushed into the splined hub and for rotation of the pressure spindle (110) is disposed in rotationally coupled engagement with the splined hub (122);
**characterised in that** the device is used for adjusting a roll as the object in a roll stand for the rolling of metallic rolling material.

2. Use of a device (100) for adjusting an object (200), comprising:
a rotatably mounted pressure spindle (110);
a torque motor (120) with a stator and a rotor for rotating the pressure spindle (110),
wherein the stator is constructed in the form of at least one electromagnetic coil and is mounted in stationary location;
a pressure nut (130), which is arranged in stationary location and which is disposed in rotationally coupled engagement with the pressure spindle by way of a thread (132) in order to generate an axial movement of the pressure spindle in the case of rotation thereof and to generate and transmit an axial adjusting force to the object (200);
wherein
the torque motor (120) is constructed as an internal runner, wherein the rotor (122) rotates in the stator (126);
the rotor (122) of the torque motor is constructed in the form of a rotatably mounted splined hub and
the motor-side end of the pressure spindle is constructed in the form of a splined shaft (115) which is pushed into the splined hub and for rotation of the pressure spindle (110) is disposed in rotationally coupled engagement with the splined hub (122);
**characterised in that** the device is used for adjusting a pressure ram as the object in a slab upsetting press.

3. Roll stand comprising a roll for rolling metallic rolling material;
**characterised by**
a device (100) for adjusting the roll (200), comprising:
a rotatably mounted pressure spindle (110);
a torque motor (120) with a stator and a rotor for rotating the pressure spindle (110),
wherein the stator is constructed in the form of at least one electromagnetic coil and is mounted in stationary location;
a pressure nut (130) which is arranged in stationary location and which is disposed in rotationally coupled engagement with the pressure spindle by way of a thread (132) in order to generate an axial movement of the pressure spindle in the case of rotation thereof and to generate and transmit an axial adjusting force to the roll (200);
**characterised in that**
the torque motor (120) is constructed as an internal runner;
the rotor (122) rotates in the stator (126);
the rotor (122) of the torque motor is constructed in the form of a rotatably mounted splined hub and
the motor-side end of the pressure spindle is constructed in the form of a splined shaft (115) which is pushed into the splined hub and for rotating the pressure spindle (110) is disposed in rotationally coupled engagement with the splined hub (122).

4. Roll stand according to claim 3, **characterised in that** the splined hub (122) is made of a non-magnetic material.

5. Roll stand according to one of claims 3 and 4, **characterised by** a housing (140) on which is or are mounted the stator (126) in stationary location, the pressure nut (130) in stationary location and/or the rotor (122) in the form of the splined hub to be stationary in axial direction (A), but preferably by way of roller bearings (150).

6. Roll stand according to any one of claims 3 to 5, **characterised by** a brake device (160) for braking and holding the rotor.

7. Roll stand according to any one of claims 3 to 6, **characterised by** a travel transmitter (170) for detection of the axial setting or displacement position of the pressure spindle (110).

8. Roll stand according to any one of claims 3 to 7, **characterised in that** at least one permanent magnet (125), preferably made of a rare earth metal, for example neodymium, is mounted at the periphery of the rotor (122).

## Revendications

1. Utilisation d'un dispositif (100) destiné au positionnement d'un objet (200), qui présente :
une broche filetée (110) qui est montée en rotation ;
un moteur couple (120) qui comprend un stator et un rotor pour la mise en rotation de la broche filetée (110) ; dans laquelle le stator est réalisé sous la forme d'au moins une bobine électromagnétique et est monté à demeure ;
un écrou de serrage (130) qui est monté à demeure, qui entre en engrènement en passant par un accouplement rotatif par l'intermédiaire d'un filet de vis (132) avec la broche filetée afin d'obtenir un mouvement axial de la broche filetée dans le cas de sa rotation et afin d'obtenir et de transférer une force de positionnement axiale à l'objet (200) ;
dans laquelle le moteur couple (120) est réalisé sous la forme d'un rotor interne; dans laquelle le rotor (122) effectue des rotations dans le stator (126) ;
le rotor (122) du moteur couple est réalisé sous la forme d'un moyeu cannelé qui est monté en rotation ; et
l'extrémité de la broche filetée, du côté du moteur, est réalisée sous la forme d'un arbre cannelé (115) qui a été inséré dans le moyeu cannelé et qui est entre en engrènement en passant par un accouplement rotatif avec le moyeu cannelé (122) à des fins de mise en rotation de la broche filetée (110) ;
**caractérisé en ce que** le dispositif qui est destiné au positionnement d'un cylindre à titre de l'objet est utilisé dans une cage de laminoir à des fins de laminage d'un produit de laminage métallique.

2. Utilisation d'un dispositif (100) destiné au positionnement d'un objet (200), qui présente :
une broche filetée (110) qui est montée en rotation ;
un moteur couple (120) qui comprend un stator et un rotor pour la mise en rotation de la broche filetée (110) ; dans laquelle le stator est réalisé sous la forme d'au moins une bobine électromagnétique et est monté à demeure ;
un écrou de serrage (130) qui est monté à demeure, qui entre en engrènement en passant par un accouplement rotatif par l'intermédiaire d'un filet de vis (132) avec la broche filetée afin d'obtenir un mouvement axial de la broche filetée dans le cas de sa rotation et afin d'obtenir et de transférer une force de positionnement axiale à l'objet (200) ;
dans laquelle le moteur couple (120) est réalisé sous la forme d'un rotor interne; dans laquelle le rotor (122) effectue des rotations dans le stator (126) ;
le rotor (122) du moteur couple est réalisé sous la forme d'un moyeu cannelé qui est monté en rotation ; et
l'extrémité de la broche filetée, du côté du moteur, est réalisée sous la forme d'un arbre cannelé (115) qui a été inséré dans le moyeu cannelé et qui est entre en engrènement en passant par un accouplement rotatif avec le moyeu cannelé (122) à des fins de mise en rotation de la broche filetée (110) ;
**caractérisée en ce que** le dispositif qui est destiné au positionnement d'un plongeur à titre de l'objet est utilisé dans une presse de brames du type à refoulement.

3. Cage de laminoir qui présente
un cylindre qui est destiné à un produit métallique de laminage ; **caractérisée par** :
un dispositif (100) destiné au positionnement d'un objet (200), qui présente :
une broche filetée (110) qui est montée en rotation ;
un moteur couple (120) qui comprend un stator et un rotor pour la mise en rotation de la broche filetée (110) ; dans laquelle le stator est réalisé sous la forme d'au moins une bobine électromagnétique et est monté à demeure ;
un écrou de serrage (130) qui est monté à demeure, qui entre en engrènement en passant par un accouplement rotatif par l'intermédiaire d'un filet de vis (132) avec la broche filetée afin d'obtenir un mouvement axial de la broche filetée dans le cas de sa rotation et afin d'obtenir et de transférer une force de positionnement axiale à l'objet (200) ;
**caractérisée en ce que**
le moteur couple (120) est réalisé sous la forme d'un rotor interne ;
le rotor (122) effectue des rotations dans le stator (126) ;
le rotor (122) du moteur couple est réalisé sous la forme d'un moyeu cannelé qui est monté en rotation ; et
l'extrémité de la broche filetée, du côté du moteur, est réalisée sous la forme d'un arbre cannelé (115) qui est inséré dans le moyeu cannelé et qui est entre en engrènement en passant par un accouplement rotatif avec le moyeu cannelé (122) à des fins de mise en rotation de la broche filetée (110).

4. Cage de laminoir selon la revendication 3, **caractérisée en ce que** le moyeu cannelé (122) est réalisé à partir d'une matière première amagnétique.

5. Cage de laminoir selon la revendication 3 ou 4, **caractérisée par** un boîtier (140) contre lequel le stator (126) est monté à demeure, l'écrou de serrage monté 130) est monté à demeure et/ou le rotor (122), sous la forme du moyeu cannelé est monté à demeure dans la direction axiale(A), mais d'une manière préférentielle est monté en rotation par l'intermédiaire de paliers à rouleaux (150).

6. Cage de laminoir selon l'une quelconque des revendications 3 à 5, **caractérisée par** un mécanisme de freinage (160) qui est destiné à freiner et à arrêter le rotor.

7. Cage de laminoir selon l'une quelconque des revendications 3 à 6, **caractérisée par** un capteur de déplacement (170) qui est destiné à enregistrer la position axiale, respectivement la position de déplacement de la broche filetée (110).

8. Cage de laminoir selon l'une quelconque des revendications 3 à 7, **caractérisé par** en ce que l'on applique au moins un aimant permanent (125), de préférence constitué par un métal des terres rares, par exemple réalisé à partir de néodyme, à la périphérie du rotor (122).
